# FASCICULE DE BREVET EUROPEEN

(11) **EP 0 856 763 B1**
(45) Date de publication et mention de la délivrance du brevet: **05.11.2003**
(21) Numéro de dépôt: 98100515.0
(22) Date de dépôt: 14.01.1998
(51) Int. Cl.: G02C 5/22

(54) **Charnière élastique**
Federscharnier
Resilient hinge

(30) Priorité: 29.01.1997 CH 18397
(43) Date de publication de la demande: 05.08.1998
(73) Titulaire: LN Industries S.A., 1211 Genève 8 (CH)
(72) Inventeur: Moenne, Claude, 74800 Arenthon (FR); Serafini, Luciano, 1207 Genève (CH); Gerbet, André, 39300 Champagnole (FR)
(74) Mandataire: Micheli & Cie

(56) Documents cités:
- EP-A- 0 003 001
- EP-A- 0 399 875
- EP-A- 0 628 846
- EP-A- 0 632 306
- FR-A- 2 428 859

## Description

La présente invention concerne une charnière élastique pour monture de lunettes comprenant deux charnons dont un premier est destiné à être fixé à la partie face de la monture et dont un second est destiné à être relié à une branche au moyen d'un dispositif élastique, ce dispositif comportant un logement dans lequel est monté de façon coulissant un prolongement du second charnon soumise à l'action d'un ressort de manière à solliciter une partie frontale du logement élastiquement contre au moins une partie du premier charnon formant came pour déterminer des positions d'arrêts de la branche.

Une charnière de ce type est décrite dans le document FR 2609816. Etant donné que dans ce type de charnières la partie frontale du logement du ressort est sollicitée avec une force considérable contre l'autre charnon, aussi bien le charnon que le logement sont fréquemment endommagés et ceci en particulier lorsque la monture est fabriquée en un matériau délicat, grippant, se détériorant facilement par écrasement ou peu résistant au frottement, comme c'est par exemple le cas pour les montures en titane ou en alliages de titane.

Le but de la présente invention est de remédier aux inconvénients précités et elle est caractérisée à cet effet par le fait que la charnière comprend une plaquette constituée en un matériau à faible coefficient de frottement agencée autour audit prolongement et intercalée entre ladite partie frontale et la partie formant came.

Par ces caractéristiques on obtient une charnière d'une grande solidité et longévité, et d'un fonctionnement précis, facile et sans grippage ni à-coups. Les inconvénients liés à une utilisation de montures en matériaux délicats ou grippants, comme le titane, peuvent ainsi être entièrement évités.

En cas d'usure prématurée, la plaquette pourrait en outre être changée aisément pour rendre à la charnière son fonctionnement précis à très peu de frais.

Favorablement, ladite partie frontale présente deux surfaces sensiblement orthogonales, une première étant sensiblement perpendiculaire à la branche et la seconde étant sensiblement parallèle à la branche et à l'axe de charnière et ladite plaquette est constituée par une pièce présentant un angle sensiblement droit de façon à s'appliquer contre les deux surfaces orthogonales de la partie frontale.

On obtient ainsi une excellent protection des parties mobiles de la charnière dans les différentes positions d'arrêt et dans toutes les positions intermédiaires, ainsi qu'un fonctionnement particulièrement régulier.

Un mode d'exécution préféré est caractérisé par le fait que ledit ressort est un ressort à boudin entourant le prolongement qui présente une largeur plus faible que le diamètre intérieur du ressort, la première surface de la partie frontale du logement comportent une ouverture d'une largeur égale ou supérieure au diamètre extérieur du ressort à boudin de façon que ce dernier puisse être introduit dans le logement à travers cette partie frontale et retenu dans le logement par des moyens de blocage, et par le fait que ladite plaquette présente une ouverture centrale d'une largeur plus faible que la largeur de l'ouverture du logement de façon que la plaquette constitue, pour la ou les parties formant came du premier charnon, une face d'appui, dont la surface est plus grande que celle de ladite première surface.

Dans les charnières connues, la surface frontale du logement destinée à coopérer avec la came présente une largeur latérale considérablement réduite du fait de l'alésage d'introduction relativement grand prévu pour le ressort. A ces endroits, les charnières connues sont encore plus rapidement usées et détériorées engendrant un mauvais fonctionnement des charnières par grippage menant à leur destruction. Par les caractéristiques précitées, la surface d'appui des parties mobiles en contact est significativement augmentée et rendue résistante. La charnière présente donc une solidité et une longévité accrues, une stabilité améliorée et un fonctionnement plus régulier sans grippage.

Avantageusement, la plaquette est constituée par deux bandes d'une largeur sensiblement égale à celle des parties formant came du premier charnon, ces deux bandes constituant des glissières et étant reliées à leurs extrémités supérieures et inférieures.

Ces caractéristiques permettent un fonctionnement particulièrement précis.

La plaquette sera favorablement constituée par du maillechort, du bronze, de l'acier inoxydable, de l'acier traité galvaniquement, par un polymère résistant au frottement ou par un matériau ayant subi un traitement de surface.

D'autres avantages ressortent des caractéristiques exprimées dans les revendications dépendantes et de la description exposant ci-après l'invention plus en détail à l'aide de dessins qui représentent schématiquement et à titre d'exemple un mode d'exécution.
La figure 1 est une vue schématique en perspective éclatée de ce mode d'exécution.
La figure 2 représente ce mode d'exécution en coupe longitudinale.
Les figures 3 et 4 illustrent ce mode d'exécution en position repliée et ouverte.

La charnière élastique représentée aux figures comprend un premier charnon 1 solidaire de la partie face 2 de la monture de lunettes articulé grâce à une vis 3 à un second charnon 4 relié à une branche de lunettes 5 par l'intermédiaire d'un dispositif élastique 6 à ressort.

Ce dispositif comporte un boîtier 10 qui est solidaire de la branche 5 ou qui forme une partie intégrante de cette charnière. Ce boîtier comprend un logement 11 s'étendant suivant un sens longitudinal par rapport à la branche 5. Ce logement 11 possède une partie frontale 12 avec deux surfaces 15,16 sensiblement orthogonales. Une première 15 de ces surfaces est sensiblement perpendiculaire à l'axe de la branche 5, tandis que la seconde 16 est orientée parallèlement aux axes de la branche et de la charnière.

La première surface 15 comprend une ouverture 17 communiquant avec le logement 11. Le premier charnon 1 se termine en deux branches 20,21 dont la périphérie forme des profils de cames 23. Entre ces branches est monté de façon tournante le second charnon 4 qui est solidaire d'un prolongement sous forme d'une tige 24 avec une tête terminale 25. Cette tige 24 porte un ressort à boudin 26 dont le diamètre intérieur est plus grand que le diamètre extérieur de la tige 24. L'ensemble tige-ressort peut être introduite par coulissement longitudinal à travers l'ouverture 17 dans le logement 11, étant donné que le diamètre externe du ressort est inférieur au diamètre de l'ouverture 17. Un organe de blocage 28 comporte une bague d'appui 29 et un anneau fendu 30 destinés à coopérer élastiquement avec une rainure circulaire 31 du logement 11. Cet organe 28 est introduit par coulissement dans le logement 11 et rendu solidaire de sa paroi intérieure pour former une butée pour une première extrémité du ressort 26, tandis que la deuxième extrémité de ce ressort 26 prend appui sur la tête 25 de la tige 24. Ainsi, le ressort 26 sollicite la partie frontale 12 du logement 11 en direction des branches 20,21 du premier charnon 1.

La charnière est munie d'une plaquette 32 constituée en un matériau à faible coefficient de frottement agencée autour de la tige 24 et intercalée entre la partie frontale 12 du logement 11 et les deux branches 20,21 du premier charnon 1. Cette plaquette 32 est pliée pour former un angle sensiblement droit de façon à s'appliquer contre les deux surfaces 15,16 de la partie frontale 12. Elle présente une ouverture centrale 33 d'une largeur plus faible que le diamètre de l'ouverture 17 du logement 11 de manière à constituer pour les deux branches 21,22 des faces d'appui dont la surface est plus grande que celle de la surface 15. Ainsi, la plaquette 32 est constituée par deux bandes 34,35 formant des glissières pour les branches 20,21 d'une largeur sensiblement égale à celle de ces branches 20,21 et reliées à leurs extrémités supérieures et inférieures par des traverses.

La plaquette 32 est avantageusement constituée par du maillechort, du bronze, de l'acier inoxydable, de l'acier traité galvaniquement, par un polymère résistant au frottement, tel que le tétrafluoréthylène ou par un matériau ayant subi un traitement de surface sous vide, par exemple au MoS₂. Elle permet par sa constitution et par sa géométrie d'éviter le grippage de la charnière, d'améliorer le coefficient de frottement entre les parties mobiles de la charnière, d'augmenter la surface d'appui utilisée par les cames 20,21 de la charnière. Elle permet d'obtenir une charnière à double effet. Cette plaquette est particulièrement utile dans le cas de montures constituées en matériaux délicats, grippants, se détériorant par écrasement, peu solides et résistants, comme par exemple les montures en titane ou en alliages de titane. Dans ces cas, la plaquette évite un endommagement et une usure prématurée de la charnière.

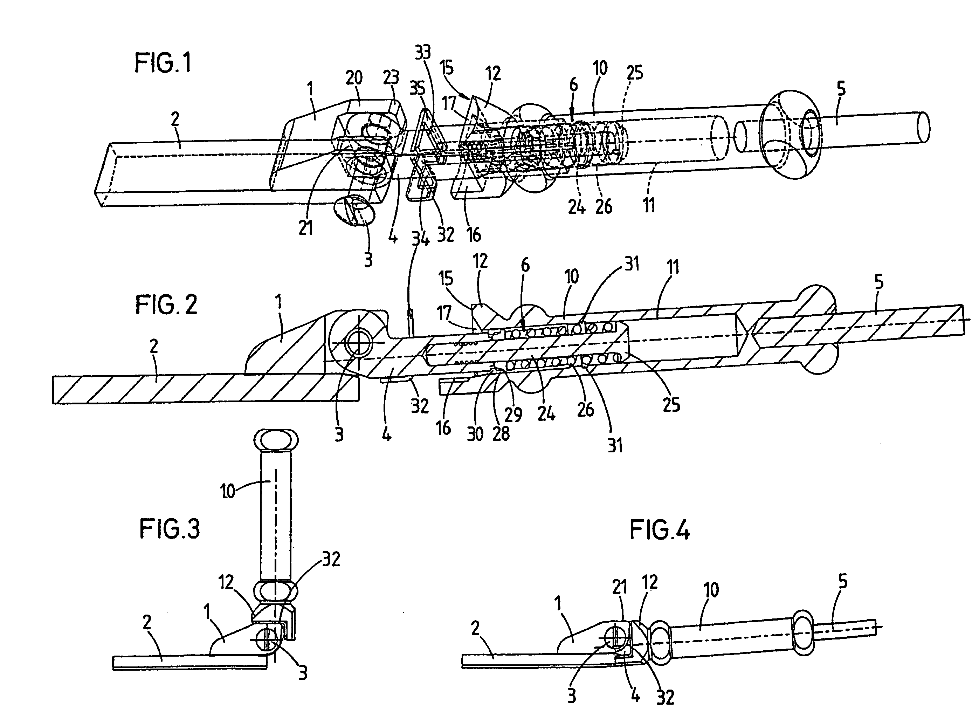

La forme particulière de la plaquette permet d'envelopper efficacement les surfaces frontales actives 23 des cames 20,21 et ceci dans toutes les positions, y compris les deux positions d'arrêt repliée et ouverte illustrées aux figures 3 et 4.

Il est bien entendu que le mode de réalisation décrit ci-dessus ne présente aucun caractère limitatif et qu'il peut recevoir toutes modifications désirables à l'intérieur du cadre tel que défini par la revendication 1. En particulier, la plaquette pourra présenter une autre forme adaptée aux surfaces qu'elle est destinée à protéger, en étant conformée de façon à s'appliquer soit à ladite partie frontale 12 du logement, soit à la partie 20,21 formant came du premier charnon 1, même si ces parties présentent une autre forme que celle du mode d'exécution illustré. Le dispositif élastique reliant le second charnon à la branche de lunettes pourrait être d'une construction différente, par exemple avec un ressort d'une autre nature. Le premier charnon 1 pourrait présenter un autre nombre de branches et des surfaces formant un profil de came ayant une autre forme que celle des branches 20,21 et déterminant par exemple un nombre supérieur à deux de positions d'arrêt.

## Revendications

1. Charnière élastique pour monture de lunettes comprenant deux charnons (1,4) dont un premier (1) est destiné à être fixé à la partie face (2) de la monture et dont un second (4) est destiné à être relié à une branche (5) au moyen d'un dispositif élastique (6), ce dispositif comportant un logement (11) dans lequel est monté de façon coulissante un prolongement (24) du second charnon (4) soumise à l'action d'un ressort (26) de manière à solliciter une partie frontale (12) du logement (11) élastiquement contre au moins une partie (20,21) du premier charnon (1) formant came pour déterminer des positions d'arrêts de la branche (5), **caractérisée par le fait que** la charnière comprend une plaquette (32) constituée en un matériau à faible coefficient de frottement agencée autour dudit prolongement (24) et intercalée entre ladite partie frontale (12) et la partie (20,21) formant came.

2. Charnière selon la revendication 1, **caractérisée par le fait que** la plaquette (32) est conformée de façon à s'appliquer à ladite partie frontale (12) du logement ou à la partie (20,21) formant came du premier charnon (1).

3. Charnière selon la revendication 1 ou 2, **caractérisée par le fait que** ladite partie frontale (12) présente deux surfaces (15,16) sensiblement orthogonales, une première (15) étant sensiblement perpendiculaire à la branche (5) et la seconde (16) étant sensiblement parallèle à la branche (5) et à l'axe de charnière et **par le fait que** ladite plaquette (32) est constituée par une pièce présentant un angle sensiblement droit de façon à s'appliquer contre les deux surfaces orthogonales (15,16) de la partie frontale (12).

4. Charnière selon la revendication 3, **caractérisée par le fait que** ledit ressort (26) est un ressort à boudin entourant le prolongement (24) qui présente une largeur plus faible que le diamètre intérieur du ressort (26), la première surface (15) de la partie frontale (12) du logement comportant une ouverture (17) d'une largeur égale ou supérieure au diamètre extérieur du ressort à boudin (26) de façon que ce dernier puisse être introduit dans le logement (11) à travers cette partie frontale (12) et retenu dans le logement (11) par des moyens de blocage (28), et **par le fait que** ladite plaquette (32) présente une ouverture centrale (33) d'une largeur plus faible que la largeur de l'ouverture (17) du logement (11) de façon que la plaquette (32) constitue, pour la ou les parties (20,21) formant came du premier charnon, une face d'appui, dont la surface est plus grande que celle de ladite première surface (15).

5. Charnière selon l'une des revendications précédentes, **caractérisée par le fait que** la plaquette (32) est constituée par deux bandes (34,35) d'une largeur sensiblement égale à celle des parties (20,21) formant came du premier charnon (1), ces deux bandes (34,35) constituant des glissières et étant reliées à leurs extrémités supérieure et inférieures.

6. Charnière selon l'une des revendications précédentes, **caractérisée par le fait que** la plaquette (32) est constituée par du maillechort, du bronze, de l'acier inoxydable, de l'acier traité galvaniquement, par un polymère résistant au frottement ou par un matériau ayant subi un traitement de surface.

## Patentansprüche

1. Federscharnier für Brillengestell mit zwei Scharnierflügeln (1, 4), von denen ein erster (1) am vorderen Abschnitt (2) des Gestells befestigt und ein zweiter (4) mittels einer elastischen Vorrichtung (6) mit einem Bügel (5) verbunden zu werden bestimmt ist, wobei diese Vorrichtung (6) ein Lager (11) umfasst, in dem eine Verlängerung (24) des zweiten Scharnierflügels (4) unter der Einwirkung einer Feder (26) gleitend so untergebracht ist, dass ein stirnseitiger Abschnitt (12) des Lagers (11) federnd gegen zumindest einen Abschnitt (20, 21) des ersten Scharnierflügels (1) gedrückt wird, der einen Nocken bildet, um die Anschlagstellungen des Bügels (5) festzulegen, **dadurch gekennzeichnet, dass** das Scharnier ein Plättchen (32) enthält, das aus einem Werkstoff mit einem niedrigen Reibungskoeffizienten gefertigt, um die benannte Verlängerung (24) herum angeordnet und zwischen den benannten stirnseitigen Abschnitt (12) und den einen Nocken bildenden Abschnitt (20, 21) eingefügt ist.

2. Scharnier nach Anspruch 1, **dadurch gekennzeichnet, dass** das Plättchen (32) so gestaltet ist, dass es sich an den benannten stirnseitigen Abschnitt (12) des Lagers oder an den einen Nocken bildenden Abschnitt (20, 21) des ersten Scharnierflügels (1) anschmiegt.

3. Scharnier nach Anspruch 1 oder 2, **dadurch gekennzeichnet, dass** der benannte stirnseitige Abschnitt (12) zwei im Wesentlichen orthogonale Oberflächen (15, 16) aufweist, von denen eine erste (15) im Wesentlichen senkrecht zum Bügel (5) und die zweite (16) im Wesentlichen parallel zum Bügel (5) und zur Scharnierachse ist, und dadurch, dass das benannte Plättchen (32) aus einem Stück besteht, das einen im Wesentlichen rechten Winkel bildet, so dass es sich an die beiden orthogonalen Oberflächen (15, 16) des stirnseitigen Abschnitts (12) anschmiegt.

4. Scharnier nach Anspruch 3, **dadurch gekennzeichnet, dass** die benannte Feder (26) eine Schraubenfeder ist, die die Verlängerung (24) umgibt, deren Breite geringer als der Innendurchmesser der Feder (26) ist, wobei die erste Oberfläche (15) des stirnseitigen Abschnitts (12) des Lagers eine Öffnung (17) von einer Weite aufweist, die dem Aussendurchmesser der Schraubenfeder (26) gleich ist oder diesen übersteigt, so dass letztere durch diesen stirnseitigen Abschnitt (12) hindurch in das Lager (11) eingesetzt und durch Arretierorgane (28) in diesem Lager (11) zurückgehalten werden kann, und dadurch, dass das benannte Plättchen (32) eine zentrale Öffnung (33) von einer Weite aufweist, die kleiner als die Weite der Öffnung (17) des Lagers (11) ist, so dass das Plättchen (32) für den oder die Abschnitte (20, 21) des ersten Scharnierflügels, die einen Nocken bilden, eine Stützfläche darstellt, dessen Oberfläche grösser als die der benannten ersten Oberfläche (15) ist.

5. Scharnier nach einem der vorangehenden Ansprüche, **dadurch gekennzeichnet, dass** das Plättchen (32) aus zwei Streifen (34, 35) besteht, deren Breite im Wesentlichen der der einen Nocken bildenden Abschnitte (20, 21) des ersten Scharnierflügels (1) gleicht, wobei diese beiden Streifen (34, 35) Gleitflächen darstellen und an ihrem oberen und unteren Ende miteinander verbunden sind.

6. Scharnier nach einem der vorangehenden Ansprüche, **dadurch gekennzeichnet, dass** das Plättchen (32) aus Neusilber, Bronze, rostfreiem Stahl, galvanisch behandeltem Stahl, einem abriebfesten Polymer oder einem oberflächenbehandelten Werkstoff besteht.

## Claims

1. A resilient hinge for a frame of glasses, comprising two knuckles (1,4) of which the first one (1) is designed for being fastened to the front part (2) of the frame and of which the second one (4) is designed for being connected to a side piece (5) by means of a resilient device (6), this device having a housing (11) into which is mounted slidably an extension (24) of the second knuckle (4), which extension is subjected to the action of a spring (26), in such a manner as to bias resiliently a front part (12) of the housing (11) against at least one part (20,21) of the first knuckle (1) acting as a cam, to define stop positions for the side piece (5), **characterized in that** the hinge comprises a plate (32) made of a material having a low coefficient of friction set around said extension (24) and placed between said front part (12) and the part (20,21) acting as a cam.

2. A hinge according to claim 1, **characterized in that** the small plate (32) is conformed so that it may be applied on said front part (12) of the housing or on the part (20,21) acting as a cam of the first knuckle (1).

3. A hinge according to claim 1 or 2, **characterized in that** said front part (12) has two surfaces (15, 16) which are substantially orthogonal, a first one (15) being substantially perpendicular to the side piece (5) and the second one (16) being substantially parallel to the side piece (5) and to the axis of the hinge, and **in that** said plate (32) is provided as a piece having a substantially right angle so that it may be applied against the two orthogonal surfaces (15,16) of the front part (12).

4. A hinge according to claim 3, **characterized in that** said spring (26) is a helical spring surrounding the extension (24) which has a width lesser than the inner diameter of the spring (26), the first surface (15) of the front part (12) of the housing having an opening (17) of a width equal or greater than the outer diameter of the helical spring (26) in such a manner that the latter may be introduced into the housing (11) through this front part (12) and retained in the housing (11) by blocking means (28), and **in that** said plate (32) has a central opening (33) of a width lesser than the width of the opening (17) of the housing (11) so that the small plate (32) provides for the part or the parts (20,21) acting as a cam of the first knuckle, a bearing surface having an area which is greater than that of said first surface (15).

5. A hinge according to one of the preceding claims, **characterized in that** the plate (32) is made of two strips (34,35) of a width substantially equal to that of the parts (20,21) acting as a cam of the first knuckle (1), these two strips (34,35) providing slides and being connected together at their upper and lower ends.

6. A hinge according to one of the preceding claims, **characterized in that** the plate (32) is made of nickel silver, bronze, stainless steel, galvanically treated steel, a polymer resistent to friction or of a material having undergone a surface treatment.
